# EUROPEAN PATENT APPLICATION

(11) **EP 4 717 517 A1**
(43) Date of publication of application: **01.04.2026**
(21) Application number: 25202989.7
(22) Date of filing: 18.09.2025
(51) Int. Cl.: B60N 2/06, B60N 2/16, B60N 2/18, B60N 2/23, F16H 25/24

(54) **APPARATUS FOR MOVING SEAT RAIL FOR VEHICLE**

(30) Priority: 30.09.2024 KR 20240132798
(71) Applicant: Hyundai Transys Inc., Chungcheongnam-do 31930 (KR)
(72) Inventor: LEE, Young Sun, 18463 Hwaseong-si, Gyeonggi-do (KR)
(74) Representative: Viering, Jentschura & Partner mbB Patent- und Rechtsanwälte

(57) **Abstract**

An apparatus for moving a seat rail for a vehicle includes a casing, a lead nut mounted in the casing, screw-coupled to a lead screw configured to penetrate the casing, and configured to move along the lead screw, a worm wheel coupled to an outer-diameter portion of the lead nut, a locking member provided between the outer-diameter portion of the lead nut and an inner-diameter portion of the worm wheel, and a clutch drum coupled to one side outer-diameter portion of the lead nut so as to be opposite to the worm wheel and configured to perform an engagement operation to release a locked state of the locking member and prevent power from the worm wheel from being transmitted to the lead nut.

## Description

### CROSS-REFERENCE TO RELATED APPLICATIONS

This application claims priority to and the benefit of Korean Patent Application No. 10-2024-0132798 filed in the Korean Intellectual Property Office on September 30, 2024, the entire contents of which are incorporated herein by reference.

### TECHNICAL FIELD

The present disclosure relates to an apparatus for moving a seat rail for a vehicle.

### BACKGROUND ART

In general, seats may be mounted in a vehicle. The vehicle seat may include a seatback configured to support a passenger's upper body, a seat cushion configured to support the passenger's lower body, and a headrest configured to support the passenger's head.

Seat rails, which are applied to second-row or third-row seats in sport utility vehicles (SUVs) or multi-purpose vehicles (MPVs), are applied as long rails longer in length than seat rails mounted in general passenger vehicles.

The vehicle seats may be classified into power seats and manual seats. The power seat may be moved to a desired position by an operation of a motor performed only by an operation of a switch. The manual seat may be moved by a manual operation.

A seat rail for a vehicle in the related art may include a lower rail and an upper rail. The lower rail is fixed to a floor panel. The upper rail is coupled to the lower rail, configured to be movable forward or rearward along the lower rail, and connected to the vehicle seat. In the case where the power seat includes an upper rail that is moved by the motor, a plurality of gears (pinion gears, rack gears, etc.) configured to move the upper rail may be mounted in the lower rail.

However, the power-driven seat rail for a vehicle in the related art is not equipped with a separate control device. As such, it is difficult to quickly move or stop the vehicle seat.

### [Document of Related Art]

### [Patent Document]

(Patent Document 1) Korean Patent Application Laid-Open No. 10-2023-0161765 (published on November 28, 2023)

### SUMMARY OF DISCLOSURE

The present disclosure has been made in an effort to solve the above-mentioned problem, and an object of the present disclosure is to provide an apparatus for moving a seat rail for a vehicle, in which an engagement operation of a clutch drum may prevent power from a power source from being transmitted to a lead nut via a worm wheel.

In order to achieve the above-mentioned object, the present disclosure provides an apparatus for moving a seat rail for a vehicle, the apparatus including: a casing; a lead nut mounted in the casing and configured to be screw-coupled to a lead screw penetrating the casing and move along the lead screw; a worm wheel coupled to an outer-diameter portion of the lead nut; at least one locking member disposed between the outer-diameter portion of the lead nut and an inner-diameter portion of the worm wheel; and a clutch drum coupled to one side of the outer-diameter portion of the lead nut and facing the worm wheel, the clutch drum being configured to perform an engagement operation to release a locked state of the at least one locking member and prevent power from the worm wheel from being transmitted to the lead nut.

**In** addition, the at least one locking member may include: a first locking member and a second locking member disposed on one side of the inner-diameter portion of the worm wheel; and a third locking member and a fourth locking member disposed on another side of the inner-diameter portion of the worm wheel, and the clutch drum may include: a first coupling protrusion and a second coupling protrusion positioned on one surface of the clutch drum directed toward the worm wheel; and at least one key positioned on an inner-diameter portion of the clutch drum and coupled to at least one key groove defined on the outer-diameter portion of the lead nut in a longitudinal direction of the lead nut, the at least one key being slidable along the at least one key groove.

**In** addition, a support member may be disposed between the worm wheel and the clutch drum, a first support protrusion and a second support protrusion may be positioned on one surface of the support member and inserted into the inner-diameter portion of the worm wheel, and a first support surface, a second support surface, a third support surface, and a fourth support surface may be positioned on the outer-diameter portion of the lead nut along a circumferential direction of the lead nut.

**In** addition, the first locking member may include: a first elastic body having one end supported by the first support protrusion on the one side of the inner-diameter portion of the worm wheel; and a first roller disposed at another end of the first elastic body opposite to the one end of the first elastic body, configured to be pushed by an elastic force of the first elastic body, and configured to be fitted between the inner-diameter portion of the worm wheel and one end of the first support surface such that the worm wheel and the lead nut are integrally rotatable, the second locking member may include: a second elastic body disposed opposite to the first elastic body on the one side of the inner-diameter portion of the worm wheel and having one end supported by the second support protrusion; and a second roller disposed opposite to the first roller on the one side of the inner-diameter portion of the worm wheel, the second roller being configured to be pushed by an elastic force of the second elastic body and configured to be fitted between the inner-diameter portion of the worm wheel and one end of the second support surface such that the worm wheel and the lead nut are integrally rotatable, the third locking member may include: a third elastic body having one end supported by the first support protrusion on the another side of the inner-diameter portion of the worm wheel; and a third roller disposed at another end of the third elastic body opposite to the one end of the third elastic body, configured to be pushed by an elastic force of the third elastic body, and configured to be fitted between the inner-diameter portion of the worm wheel and one end of the third support surface such that the worm wheel and the lead nut are integrally rotatable, and the fourth locking member may include: a fourth elastic body disposed opposite to the third elastic body on the another side of the inner-diameter portion of the worm wheel and having one end supported by the second support protrusion; and a fourth roller disposed opposite to the third roller on the another side of the inner-diameter portion of the worm wheel, the fourth roller being configured to be pushed by an elastic force of the fourth elastic body and configured to be fitted between the inner-diameter portion of the worm wheel and one end of the fourth support surface such that the worm wheel and the lead nut are integrally rotatable.

In addition, when viewed in a circular cross-section of the apparatus between the support member and the worm wheel, a width between the inner-diameter portion of the worm wheel and each of the first and second support surfaces may increase from the one end of each of the first and second support surfaces toward the another end of each of the first and second support surfaces, and a width between the inner-diameter portion of the worm wheel and each of the third and fourth support surfaces may increase from the one end of each of the third and fourth support surfaces toward the another end of each of the third and fourth support surfaces.

In addition, the first and second rollers may each be configured to be released as the first and second rollers are each pushed toward the another end of each of the first and second support surfaces by the first coupling protrusion inserted between the first and second rollers.

In addition, the third and fourth rollers may each be configured to be released as the third and fourth rollers are each pushed toward the another end of each of the third and fourth support surfaces by the second coupling protrusion inserted between the third and fourth rollers.

In addition, the support member and the clutch drum may be elastically supported by an elastic member disposed between the support member and the clutch drum.

In addition, a shift ring may be coupled to an outer-diameter portion of the clutch drum, and the shift ring may include: a main body having a ring shape and including an inner ring portion and an outer ring portion, the inner ring portion being inserted and coupled into a coupling groove positioned on the outer-diameter portion of the clutch drum; and a cut-out portion positioned between one end and another end of the main body, the one end and the another end of the main body being opposite to each other.

In addition, a coupling pin may be coupled to penetrate the one end of the main body, one end of a lever, and the another end of the main body in a state in which the one end of the lever is inserted into the cut-out portion of the main body.

In addition, the elastic member may be configured to be compressed when the clutch drum is moved in an engagement direction toward the support member by a force applied to the lever, and the clutch drum may be configured to be moved in a disengagement direction by a restoring force of the elastic member when the force applied to the lever is eliminated.

In addition, the worm wheel may be connected to a power source by a power transmission member.

In addition, the power transmission member may include a belt, and a gear portion disposed on an inner-diameter portion of the power transmission member may be configured to engage with a gear portion disposed on an outer-diameter portion of the worm wheel.

In addition, the first support surface, the second support surface, the third support surface, and the fourth support surface may each be a planar surface cutting a round circumferential surface of the outer-diameter portion of the lead nut, the planar surface extending in the longitudinal direction of the lead nut and terminating short of an entire length of the lead nut. Also, a first stepped projection, a second stepped projection, a third stepped projection, and a fourth stepped projection, which respectively correspond to the first to fourth support surfaces, may be defined on portions of the outer-diameter portion of the lead nut where the planar surfaces terminate. Also, the first locking member may be tightly attached to and supported on the first stepped projection of the first support surface, the second locking member may be tightly attached to and supported on the second stepped projection of the second support surface, the third locking member may be tightly attached to and supported on the third stepped projection of the third support surface, and the fourth locking member may be tightly attached to and supported on the fourth stepped projection of the fourth support surface.

In addition, the first support protrusion may include a first key of the support member positioned on an inner-diameter portion of the first support protrusion, and the second support protrusion may include a second key of the support member positioned on an inner-diameter portion of the second support protrusion. Also, the at least one key positioned on an inner-diameter portion of the clutch drum may include a first key of the clutch drum and a second key of the clutch drum aligned with the first key of the support member and the second key of the support member, respectively, along the longitudinal direction of the lead nut.

The present disclosure may implement various operating methods by controlling the transmission and interruption of power between the worm wheel and the lead nut.

In addition, the present disclosure may enhance passenger satisfaction by diversifying options for seat sliding methods.

In addition, the present disclosure may apply a walk-in function into a long rail system.

The foregoing summary is illustrative only and is not intended to be in any way limiting. In addition to the illustrative aspects, embodiments, and features described above, further aspects, embodiments, and features will become apparent by reference to the drawings and the following detailed description.

### BRIEF DESCRIPTION OF THE DRAWINGS

FIG. 1 is a perspective view illustrating a state in which an apparatus for moving a seat rail for a vehicle according to an exemplary embodiment of the present disclosure is coupled to a lead screw.
FIG. 2 is a side view illustrating a state in which the apparatus for moving a seat rail for a vehicle according to the exemplary embodiment of the present disclosure is coupled to the lead screw.
FIG. 3 is a perspective view of the apparatus for moving a seat rail for a vehicle according to the exemplary embodiment of the present disclosure.
FIG. 4 is an exploded perspective view of the apparatus for moving a seat rail for a vehicle according to the exemplary embodiment of the present disclosure.
FIG. 5 is a view illustrating a clutch drum according to the exemplary embodiment of the present disclosure.
FIG. 6 is a view illustrating a shift ring and a lever according to the exemplary embodiment of the present disclosure.
FIG. 7 is a side view illustrating an engagement operation of the clutch drum according to the exemplary embodiment of the present disclosure.
FIG. 8 is a perspective view illustrating the engagement operation of the clutch drum according to the exemplary embodiment of the present disclosure.
FIG. 9 is a cross-sectional view taken along line A-A in FIG. 7, i.e., a view illustrating an operation of a locking member during the engagement operation of the clutch drum.

It should be understood that the appended drawings are not necessarily to scale, presenting a somewhat simplified representation of various features illustrative of the basic principles of the disclosure. The specific design features of the present disclosure as disclosed herein, including, for example, specific dimensions, orientations, locations, and shapes will be determined in part by the particular intended application and use environment.

In the figures, reference numbers refer to the same or equivalent parts of the present disclosure throughout the several figures of the drawing.

### DETAILED DESCRIPTION

Hereinafter, exemplary embodiments of the present disclosure will be described in detail with reference to the accompanying drawings. First, in assigning reference numerals to constituent elements of the respective drawings, it should be noted that the same constituent elements will be designated by the same reference numerals, if possible, even though the constituent elements are illustrated in different drawings. In addition, in the description of the present disclosure, the specific descriptions of publicly known related configurations or functions will be omitted when it is determined that the specific descriptions may obscure the subject matter of the present disclosure. Further, the exemplary embodiments of the present disclosure will be described below, but the technical spirit of the present disclosure is not limited thereto and may, of course, be modified and variously carried out by those skilled in the art.

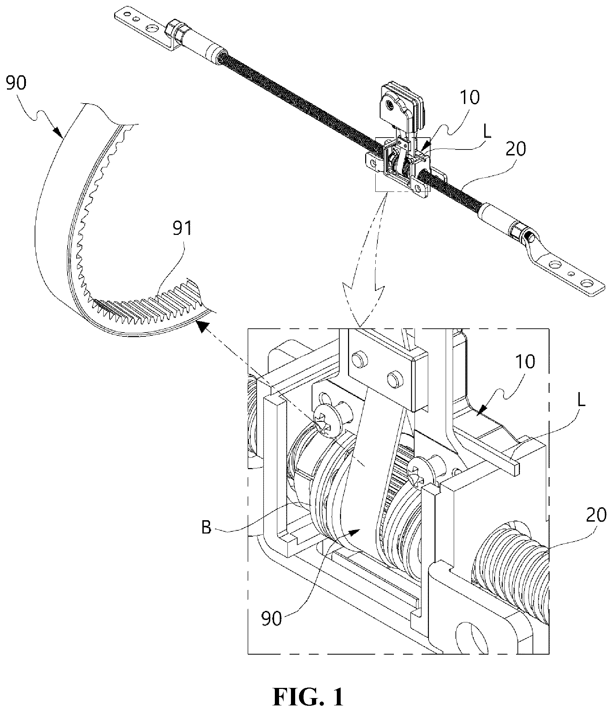

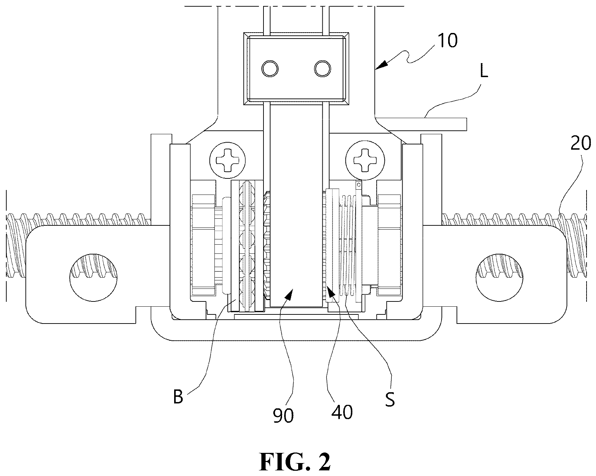

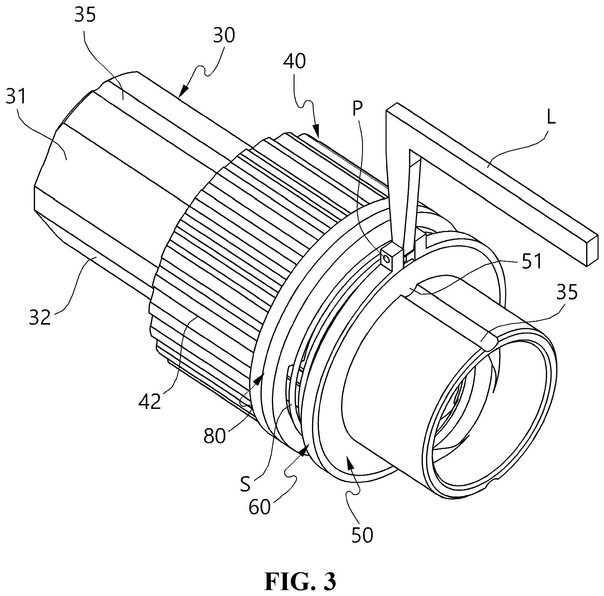

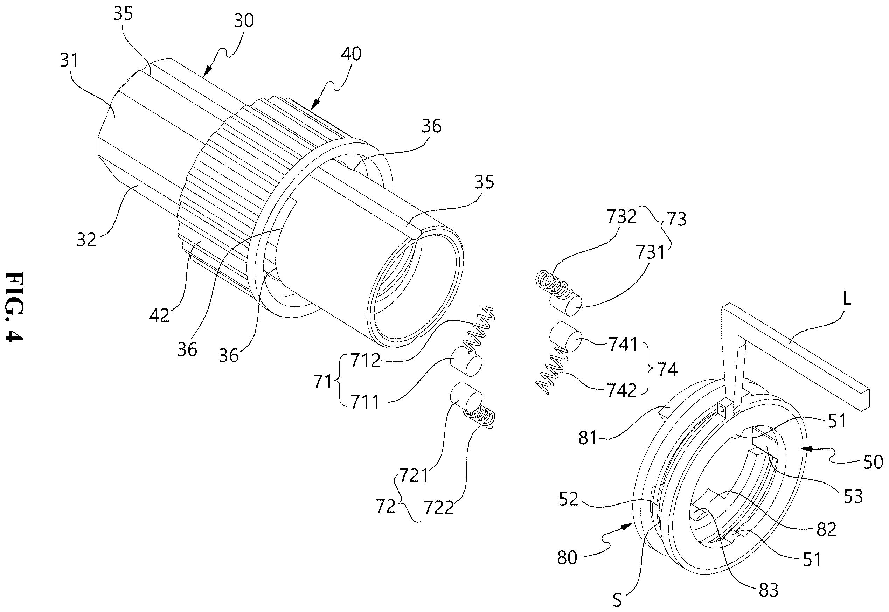

FIG. 1 is a perspective view illustrating a state in which an apparatus for moving a seat rail for a vehicle according to an exemplary embodiment of the present disclosure is coupled to a lead screw. FIG. 2 is a side view illustrating a state in which the apparatus for moving a seat rail for a vehicle according to the exemplary embodiment of the present disclosure is coupled to the lead screw. FIG. 3 is a perspective view of the apparatus for moving a seat rail for a vehicle according to the exemplary embodiment of the present disclosure. FIG. 4 is an exploded perspective view of the apparatus for moving a seat rail for a vehicle according to the exemplary embodiment of the present disclosure.

As illustrated in FIGS. 1 to 4, the apparatus for moving a seat rail for a vehicle of the present disclosure may include a casing 10, a lead nut 30 coupled in the casing 10, a worm wheel 40 coupled to an outer-diameter portion of the lead nut 30 in the casing 10, at least one locking member provided between an inner-diameter portion of the worm wheel 40 and the outer-diameter portion of the lead nut 30, a clutch drum 50 coupled to the lead nut 30 so as to be opposite to the worm wheel 40 (i.e. facing the worm wheel 40), a support member 80 positioned between the lead nut 30 and the clutch drum 50, and an elastic member S positioned between the support member 80 and the clutch drum 50.

The support member 80 and the clutch drum 50 may be elastically supported by the elastic member S provided between the support member 80 and the clutch drum 50. The elastic member S may be a spring.

A lead screw 20 may be coupled to the casing 10 while penetrating the casing 10. The casing 10 may move along the lead screw 20.

The lead screw 20 may be inserted and coupled into a lower rail (not illustrated). The lower rail (not illustrated) may be coupled to a floor panel (not illustrated) in the vehicle. The casing 10 may be connected to an upper rail (not illustrated). The upper rail (not illustrated) may be connected to a vehicle seat (not illustrated). When the casing 10 moves, the vehicle seat (not illustrated) connected to the upper rail (not illustrated) may be moved.

The lead nut 30 may be screw-coupled to the lead screw 20 that penetrates the casing 10, and the lead nut 30 may move along the lead screw 20.

The lead nut 30 may include key grooves 35, a first support surface 31, a second support surface 32, a third support surface 33, and a fourth support surface 34. The key grooves 35 may be provided in a longitudinal direction of the lead nut 30. At least one key groove 35 may be provided. The key grooves 35 may be disposed at two opposite sides and provided to be opposite to each other.

The worm wheel 40 may have a gear portion 42. The gear portion 42 may be provided on an outer-diameter portion of the worm wheel 40. The worm wheel 40 may be connected to a power source (not illustrated) by a power transmission member 90 such as a belt.

A gear portion 91 may be provided on an inner-diameter portion of the power transmission member 90. The gear portion 91 of the power transmission member 90 may engage with the gear portion 42 of the worm wheel 40. The power source (not illustrated) may be a motor.

Power from the power source (not illustrated) may be transmitted to the worm wheel 40 via the power transmission member 90. In the casing 10, the worm wheel 40 may be supported by a bearing B coupled in the casing 10 so that a movement of the worm wheel 40 is restricted.

A first support protrusion 81 and a second support protrusion 82 may be provided on one surface of the support member 80. The first support protrusion 81 and the second support protrusion 82 may be inserted into the inner-diameter portion of the worm wheel 40. Keys 83 may be provided on an inner-diameter portion of the first support protrusion 81 and an inner-diameter portion of the second support protrusion 82. The keys 83 may be inserted into the key grooves 35 of the lead nut 30.

The locking members may include a first locking member 71, a second locking member 72, a third locking member 73, and a fourth locking member 74. The first locking member 71 and the second locking member 72 may be positioned on one side of an inner-diameter portion of the worm wheel 40. The third locking member 73 and the fourth locking member 74 may be positioned on the other side of the inner-diameter portion of the worm wheel 40.

The first locking member 71 may include a first elastic body 712 and a first roller 711. The first elastic body 712 may be a spring.

One end of the first elastic body 712 may be supported on the one side of the inner-diameter portion of the worm wheel 40 by the first support protrusion 81.

The first roller 711 may be elastically supported at another end of the first elastic body 712 by the first elastic body 712. The another end of the first elastic body 712 may be opposite to the one end of the first elastic body 712 supported by the first support protrusion 81. The first roller 711 may be pushed by an elastic force of the first elastic body 712 and fitted between the inner-diameter portion of the worm wheel 40 and one end of the first support surface 31. The worm wheel 40 and the lead nut 30 may integrally rotate in the fitted state of the first roller 711. In other words, the worm wheel 40 and the lead nut 30 may rotate as one unit while the first roller 711 is fitted between the inner-diameter portion of the worm wheel 40 and one end of the first support surface 31.

The second locking member 72 may include a second elastic body 722 and a second roller 721. The second elastic body 722 may be a spring.

The second elastic body 722 may be provided on the one side of the inner-diameter portion of the worm wheel 40 while being opposite to the first elastic body 712. One end of the second elastic body 722 may be supported on the one side of inner-diameter portion of the worm wheel 40 by the second support protrusion 82.

The second roller 721 may be provided on the one side of the inner-diameter portion of the worm wheel 40 while being opposite to the first roller 711. The second roller 721 may be elastically supported at another end of the second elastic body 722 by the second elastic body 722. The another end of the second elastic body 722 may be opposite to the one end of the second elastic body 722 supported by the second support protrusion 82. The second roller 721 may be pushed by an elastic force of the second elastic body 722 and fitted between the inner-diameter portion of the worm wheel 40 and one end of the second support surface 32. The worm wheel 40 and the lead nut 30 may integrally rotate in the fitted state of the second roller 721. In other words, the worm wheel 40 and the lead nut 30 may rotate as one body while the second roller 721 is fitted between the inner-diameter portion of the worm wheel 40 and the one end of the second support surface 32.

The third locking member 73 may include a third elastic body 732 and a third roller 731. The third elastic body 732 may be a spring.

One end of the third elastic body 732 may be supported on the other side of the inner-diameter portion of the worm wheel 40 by the first support protrusion 81.

The third roller 731 may be elastically supported at another end of the third elastic body 732 by the third elastic body 732. The another end of the third elastic body 732 may be opposite to the one end of the third elastic body 732 supported by the first protrusion 81. The third roller 731 may be pushed by an elastic force of the third elastic body 732 and fitted between the inner-diameter portion of the worm wheel 40 and one end of the third support surface 33. The worm wheel 40 and the lead nut 30 may integrally rotate in the fitted state of the third roller 731. In other words, the worm wheel 40 and the lead nut 30 may rotate as one body while the third roller 731 is fitted between the inner-diameter portion of the worm wheel 40 and the one end of the third support surface 33.

The fourth locking member 74 may include a fourth elastic body 742 and a fourth roller 741. The fourth elastic body 742 may be a spring.

The fourth elastic body 742 may be provided on the other side of the inner-diameter portion of the worm wheel 40 while being opposite to the third elastic body 732. One end of the fourth elastic body 742 may be supported on the other side of the inner-diameter portion of the worm wheel 40 by the second support protrusion 82.

The fourth roller 741 may be provided on the other side of the inner-diameter portion of the worm wheel 40 while being opposite to the third roller 731. The fourth roller 741 may be elastically supported at another end of the fourth elastic body 742 by the fourth elastic body 742. The another end of the fourth elastic body 742 may be opposite to the one end of the fourth elastic body 742. The fourth roller 741 may be pushed by an elastic force of the fourth elastic body 742 and fitted between the inner-diameter portion of the worm wheel 40 and one end of the fourth support surface 34. The worm wheel 40 and the lead nut 30 may integrally rotate in the fitted state of the fourth roller 741. In other words, the worm wheel 40 and the lead nut 30 may rotate as one body while the fourth roller 741 is fitted between the inner-diameter portion of the worm wheel 40 and the one end of the fourth support surface 34.

Stepped projections 36, which respectively correspond to the first to fourth support surfaces 31, 32, 33, and 34, may be formed on the outer-diameter portion of the lead nut 30 by processing the first to fourth support surfaces 31, 32, 33, and 34. The first locking member 71 may be tightly attached to and supported on the stepped projection 36 of the first support surface 31. The second locking member 72 may be tightly attached to and supported on the stepped projection 36 of the second support surface 32. The third locking member 73 may be tightly attached to and supported on the stepped projection 36 of the third support surface 33. The fourth locking member 74 may be tightly attached to and supported on the stepped projection 36 of the fourth support surface 34.

A width W between the inner-diameter portion of the worm wheel 40 and each of the first and second support surfaces 31 and 32 may increase from one end of each of the first and second support surfaces 31 and 32 toward the other end of each of the first and second support surfaces 31 and 32. A width W between the inner-diameter portion of the worm wheel 40 and each of the third and fourth support surfaces 33 and 34 may increase from one end of each of the third and fourth support surfaces 33 and 34 toward the other end of each of the third and fourth support surfaces 33 and 34.

For example, a width W2 between the inner-diameter portion of the worm wheel 40 and one end of each of the first and second support surfaces 31 and 32 may be configured as a width that conforms to each of the first and second rollers 711 and 721 so that each of the first and second rollers 711 and 721 may be fitted. A width W2 between the inner-diameter portion of the worm wheel 40 and one end of each of the third and fourth support surfaces 33 and 34 may be configured as a width that conforms to each of the third and fourth rollers 731 and 741 so that each of the third and fourth rollers 731 and 741 may be fitted.

For example, the width W1 between the inner-diameter portion of the worm wheel 40 and the other end of each of the first and second support surfaces 31 and 32 may be configured as a width larger than an outer diameter of each of the first and second rollers 711 and 721 so that each of the first and second rollers 711 and 721 may be released. The width W1 between the inner-diameter portion of the worm wheel 40 and the other end of each of the third and fourth support surfaces 33 and 34 may be configured as a width larger than an outer diameter of each of the third and fourth rollers 731 and 741 so that each of the third and fourth rollers 731 and 741 may be released.

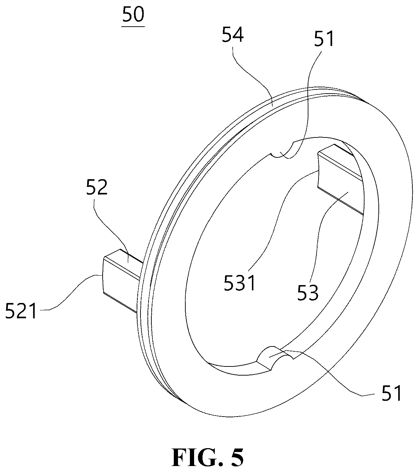

FIG. 5 is a view illustrating the clutch drum according to the exemplary embodiment of the present disclosure.

As illustrated in FIGS. 3 to 5, the locked states of the first locking member 71, the second locking member 72, the third locking member 73, and the fourth locking member 74 may be released by an engagement operation of the clutch drum 50. Therefore, it is possible to prevent power from the power source (not illustrated) from being transmitted to the lead nut 30 via the worm wheel 40.

The clutch drum 50 may include a first coupling protrusion 52, a second coupling protrusion 53, and keys 51. The first coupling protrusion 52 and the second coupling protrusion 53 may be configured as a pair of coupling protrusions provided on one surface of the clutch drum 50. The first coupling protrusion 52 and the second coupling protrusion 53 may protrude toward the worm wheel 40.

The first coupling protrusion 52 and the second coupling protrusion 53 may be formed, such that an imaginary line connecting the first coupling protrusion 52 and the second coupling protrusion 53 intersects an imaginary line connecting the first support protrusion 81 and the second support protrusion 82, to prevent interference with the first support protrusion 81 and the second support protrusion 82.

For example, in case that the first support protrusion 81 and the second support protrusion 82 are formed in a vertical direction, the first coupling protrusion 52 and the second coupling protrusion 53 may be formed in a horizontal direction.

For example, the first coupling protrusion 52 and the second coupling protrusion 53 may each have a width that decreases toward each of ends 521 and 531. A width of the end 521 of the first coupling protrusion 52 may conform to a width between the first and second rollers 711 and 721. A width of the end 531 of the second coupling protrusion 53 may conform to a width between the third and fourth rollers 731 and 741. As the first coupling protrusion 52 is inserted more deeply between the first and second rollers 711 and 721, the width between the first and second rollers 711 and 721 may further increase. As the second coupling protrusion 53 is inserted more deeply between the third and fourth rollers 731 and 741, the width between the third and fourth rollers 731 and 741 may further increase.

The first roller 711 and the second roller 721 may be pushed in an unlocking direction by the first coupling protrusion 52 inserted between the first roller 711 and the second roller 721.

The third roller 731 and the fourth roller 741 may be pushed in the unlocking direction by the second coupling protrusion 53 inserted between the third roller 731 and the fourth roller 741.

At least one key 51 may be provided on an inner-diameter portion of the clutch drum 50. The key 51 of the clutch drum 50 may be inserted into the key groove 35 of the lead nut 30 and stably slide along the key groove 35.

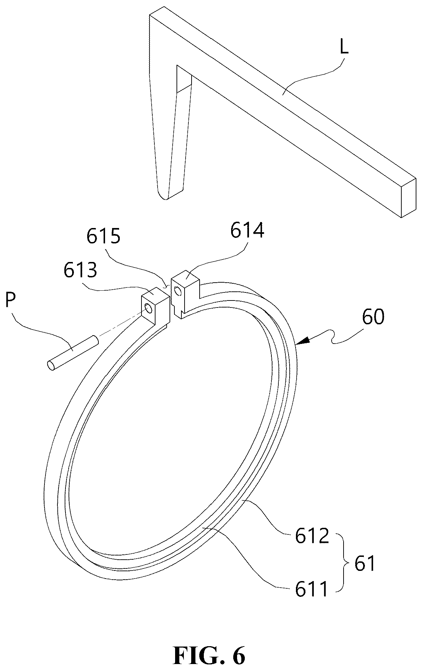

FIG. 6 is a view illustrating a shift ring and a lever according to the exemplary embodiment of the present disclosure.

As illustrated in FIG. 6, a shift ring 60 may be coupled to an outer-diameter portion of the clutch drum 50. The shift ring 60 may be configured as a ring shape.

The shift ring 60 may include a main body 61 and a cut-out portion 615. The main body 61 may include an inner ring portion 611 and an outer ring portion 612. The inner ring portion 611 may be inserted and coupled into a coupling groove 54 provided in the outer-diameter portion of the clutch drum 50.

The cut-out portion 615 may be formed between one end 613 and the other end 614 of the main body 61. One end of a lever L may be inserted into the cut-out portion 615.

The lever L and the shift ring 60 may be assembled by a coupling pin P.

The coupling pin P may be coupled to penetrate one end 613 of the main body 61, one end of the lever L, and the other end 614 of the main body 61 in a state in which the one end of the lever L is inserted into the cut-out portion 615.

Next, an operation of the locking members during the engagement operation of the clutch drum of the present disclosure.

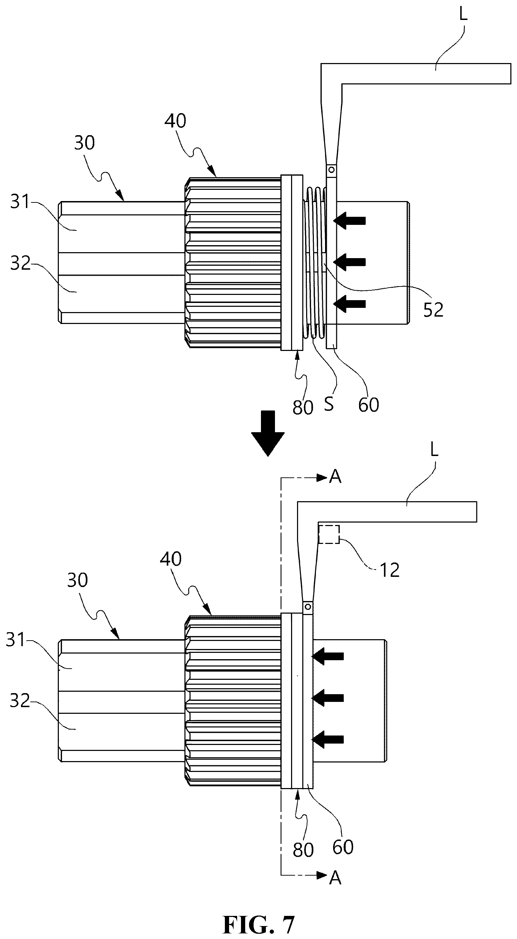

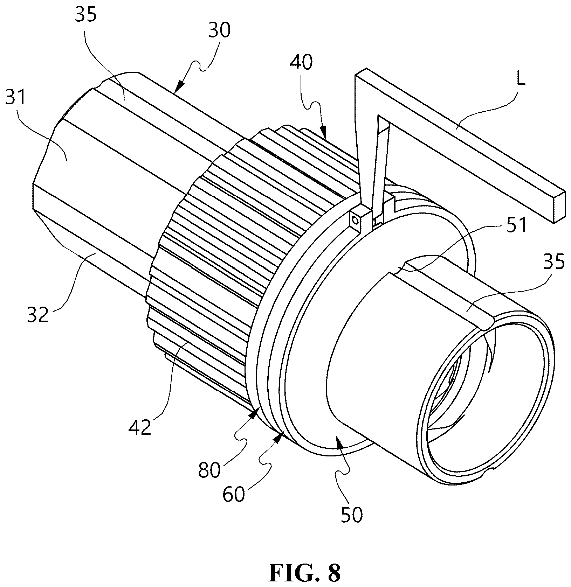

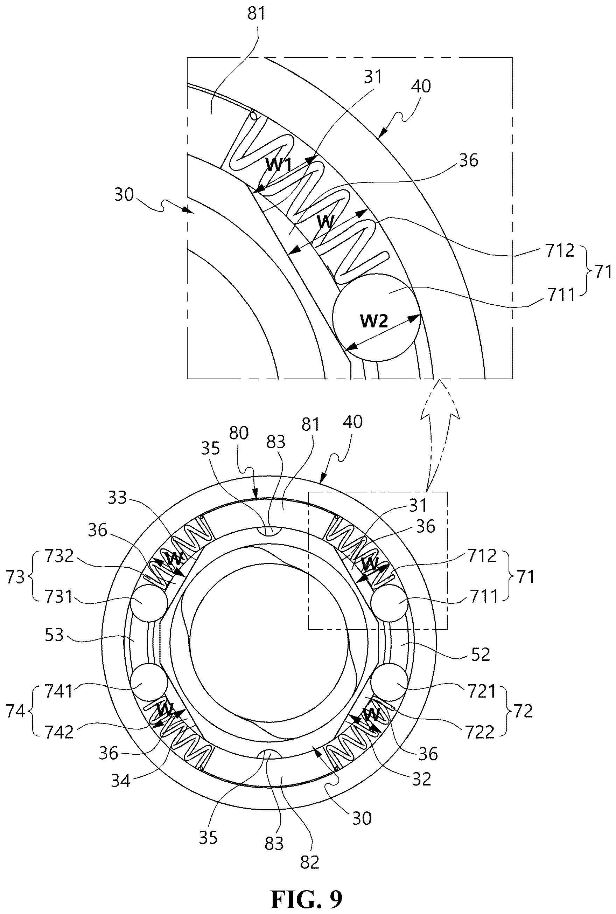

FIG. 7 is a side view illustrating the engagement operation of the clutch drum according to the exemplary embodiment of the present disclosure. FIG. 8 is a perspective view illustrating the engagement operation of the clutch drum according to the exemplary embodiment of the present disclosure. FIG. 9 is a cross-sectional view taken along line A-A in FIG. 7, i.e., a view illustrating an operation of a locking member during the engagement operation of the clutch drum.

As illustrated in FIGS. 7 and 8, the clutch drum 50 may move in an engagement direction when a force is applied to the lever L.

**In** this case, the elastic member S positioned between the support member 80 and the clutch drum 50 may be compressed by the clutch drum 50.

As illustrated in FIG. 9, when the clutch drum 50 moves in the engagement direction, the first coupling protrusion 52 of the clutch drum 50 may be inserted between the first and second rollers 711 and 721, and the second coupling protrusion 53 may be inserted between the third and fourth rollers 731 and 741.

The first roller 711 is pushed by the first coupling protrusion 52 of the clutch drum 50 and moved in the direction from one end toward the other end of the first support surface 31, such that an unlocked state in which the first roller 711 is released may be implemented.

The second roller 721 is pushed by the first coupling protrusion 52 of the clutch drum 50 and moved in the direction from one end toward the other end of the second support surface 32, such that an unlocked state in which the second roller 721 is released may be implemented.

The third roller 731 is pushed by the second coupling protrusion 53 of the clutch drum 50 and moved in the direction from one end toward the other end of the third support surface 33, such that an unlocked state in which the third roller 731 is released may be implemented.

The fourth roller 741 is pushed by the second coupling protrusion 53 of the clutch drum 50 and moved in the direction from one end toward the other end of the fourth support surface 34, such that an unlocked state in which the fourth roller 741 is released may be implemented.

Because the worm wheel 40 and the lead nut 30 cannot integrally rotate in the unlocked states of the first to fourth rollers 711, 721, 731, and 741, the power from the power source (not illustrated) cannot be transmitted to the lead nut 30 via the worm wheel 40. The lead nut 30 rotates as the power is transmitted to the lead nut 30, such that the lead nut 30 may move along the lead screw 20.

On the contrary, when the force applied to the lever L is eliminated, the compressed elastic member S may be restored to an original state and push the clutch drum 50 in a disengagement direction.

As the clutch drum 50 is pushed in the disengagement direction, the first coupling protrusion 52 may separate from the portion between the first and second rollers 711 and 721, and the second coupling protrusion 53 may separate from the portion between the third and fourth rollers 731 and 741.

As the first coupling protrusion 52 separates from the portion between the first and second rollers 711 and 721, the first roller 711 is pushed in the direction toward one end of the first support surface 31 by the elastic force of the first elastic body 712, and the second roller 721 is pushed in the direction toward one end of the second support surface 32 by the elastic force of the second elastic body 722, such that the locked state in which the first roller 711 and the second roller 721 are fitted may be implemented.

As the second coupling protrusion 53 separates from the portion between the third and fourth rollers 731 and 741, the third roller 731 is pushed in the direction toward one end of the third support surface 33 by the elastic force of the third elastic body 732, and the fourth roller 741 is pushed in the direction toward one end of the second support surface 32 by the elastic force of the fourth elastic body 742, such that the locked state in which the third roller 731 and the fourth roller 741 are fitted may be implemented.

The worm wheel 40 and the lead nut 30 may integrally rotate in the locked states of the first to fourth rollers 711, 721, 731, and 741.

When the power from the power source (not illustrated) is transmitted to the power transmission member 90 in the locked states of the first to fourth rollers 711, 721, 731, and 741, the power from the power source (not illustrated) is transmitted to the lead nut 30 via the power transmission member 90 and the worm wheel 40 because the gear portion 91 of the power transmission member 90 and the gear portion 42 of the worm wheel 40 engage with each other, such that the lead nut 30 may rotate.

The lead nut 30 may rotate and move along the lead screw 20 together with the casing 10.

For example, in case that the lever L is manually operated, the lever L may be caught by a catching portion 12 provided on the casing 10 when the lever L is axially rotated in a catching direction in a state in which the clutch drum 50 is moved in the engagement direction by applying a force to the lever L. As the lever L is caught by the catching portion 12, the movement of the clutch drum 50 in the disengagement direction may be restricted. When the lever L is axially rotated in a release direction, the lever L separates from the catching portion 12, such that a released state of the lever L may be implemented. In the released state of the lever L, the clutch drum 50 may be pushed in the disengagement direction by the elastic force of the elastic member S.

The above description is simply given for illustratively describing the technical spirit of the present disclosure, and those skilled in the art to which the present disclosure pertains will appreciate that various modifications, changes, and substitutions are possible without departing from the essential characteristics of the present disclosure. Accordingly, the embodiments disclosed in the present disclosure and the accompanying drawings are intended not to limit but to describe the technical spirit of the present disclosure, and the scope of the technical spirit of the present disclosure is not limited by the embodiments and the accompanying drawings. The protective scope of the present disclosure should be construed based on the following claims, and all the technical spirit in the equivalent scope thereto should be construed as falling within the scope of the present disclosure.

As described above, the exemplary embodiments have been described and illustrated in the drawings and the specification. The exemplary embodiments were chosen and described in order to explain certain principles of the disclosure and their practical application, to thereby enable others skilled in the art to make and utilize various exemplary embodiments of the present disclosure, as well as various alternatives and modifications thereof. As is evident from the foregoing description, certain aspects of the present disclosure are not limited by the particular details of the examples illustrated herein, and it is therefore contemplated that other modifications and applications, or equivalents thereof, will occur to those skilled in the art. Many changes, modifications, variations and other uses and applications of the present construction will, however, become apparent to those skilled in the art after considering the specification and the accompanying drawings. All such changes, modifications, variations and other uses and applications which do not depart from the spirit and scope of the disclosure are deemed to be covered by the disclosure which is limited only by the claims which follow.

### [Description of Reference Numerals]

10: Casing
12: Catching portion
20: Lead screw
30: Lead nut
31: First support surface
32: Second support surface
33: Third support surface
34: Fourth support surface
35: Key groove
36: Stepped projection
40: Worm wheel
42: Gear portion
50: Clutch drum
51: Key
52: First coupling protrusion
521: End
53: Second coupling protrusion
531: End
54: Coupling groove
60: Shift ring
61: Main body
611: Inner ring portion
612: Outer ring portion
613: One end
614: The other end
615: Cut-out portion
71: First locking member
711: First roller
712: First elastic body
72: Second locking member
721: Second roller
722: Second elastic body
73: Third locking member
731: Third roller
732: Third elastic body
74: Fourth locking member
741: Fourth roller
742: Fourth elastic body
80: Support member
81: First support protrusion
82: Second support protrusion
83: Key
90: Power transmission member
91: Gear portion
B: Bearing
L: Lever
P: Coupling pin
S: Elastic member
W: Width
W1: Width
W2: Width

## Claims

1. An apparatus for moving a seat rail for a vehicle, the apparatus comprising:
a casing;
a lead nut mounted in the casing and configured to be screw-coupled to a lead screw penetrating the casing and move along the lead screw;
a worm wheel coupled to an outer-diameter portion of the lead nut;
at least one locking member disposed between the outer-diameter portion of the lead nut and an inner-diameter portion of the worm wheel; and
a clutch drum coupled to one side of the outer-diameter portion of the lead nut and facing the worm wheel, the clutch drum being configured to perform an engagement operation to release a locked state of the at least one locking member and prevent power from the worm wheel from being transmitted to the lead nut.

2. The apparatus of claim 1,
wherein the at least one locking member comprises:
a first locking member and a second locking member disposed on one side of the inner-diameter portion of the worm wheel; and
a third locking member and a fourth locking member disposed on another side of the inner-diameter portion of the worm wheel, and
wherein the clutch drum comprises:
a first coupling protrusion and a second coupling protrusion positioned on one surface of the clutch drum directed toward the worm wheel; and
at least one key positioned on an inner-diameter portion of the clutch drum and coupled to at least one key groove defined on the outer-diameter portion of the lead nut in a longitudinal direction of the lead nut, the at least one key being slidable along the at least one key groove.

3. The apparatus of claim 1 or 2, wherein a support member is disposed between the worm wheel and the clutch drum, a first support protrusion and a second support protrusion are positioned on one surface of the support member and inserted into the inner-diameter portion of the worm wheel, and a first support surface, a second support surface, a third support surface, and a fourth support surface are positioned on the outer-diameter portion of the lead nut along a circumferential direction of the lead nut.

4. The apparatus of claims 2 and 3,
wherein the first locking member comprises:
a first elastic body having one end supported by the first support protrusion on the one side of the inner-diameter portion of the worm wheel; and
a first roller disposed at another end of the first elastic body opposite to the one end of the first elastic body, configured to be pushed by an elastic force of the first elastic body, and configured to be fitted between the inner-diameter portion of the worm wheel and one end of the first support surface such that the worm wheel and the lead nut are integrally rotatable,
wherein the second locking member comprises:
a second elastic body disposed opposite to the first elastic body on the one side of the inner-diameter portion of the worm wheel and having one end supported by the second support protrusion; and
a second roller disposed opposite to the first roller on the one side of the inner-diameter portion of the worm wheel, the second roller being configured to be pushed by an elastic force of the second elastic body and configured to be fitted between the inner-diameter portion of the worm wheel and one end of the second support surface such that the worm wheel and the lead nut are integrally rotatable,
wherein the third locking member comprises:
a third elastic body having one end supported by the first support protrusion on the another side of the inner-diameter portion of the worm wheel; and
a third roller disposed at another end of the third elastic body opposite to the one end of the third elastic body, configured to be pushed by an elastic force of the third elastic body, and configured to be fitted between the inner-diameter portion of the worm wheel and one end of the third support surface such that the worm wheel and the lead nut are integrally rotatable, and
wherein the fourth locking member comprises:
a fourth elastic body disposed opposite to the third elastic body on the another side of the inner-diameter portion of the worm wheel and having one end supported by the second support protrusion; and
a fourth roller disposed opposite to the third roller on the another side of the inner-diameter portion of the worm wheel, the fourth roller being configured to be pushed by an elastic force of the fourth elastic body and configured to be fitted between the inner-diameter portion of the worm wheel and one end of the fourth support surface such that the worm wheel and the lead nut are integrally rotatable.

5. The apparatus of claims 2 and 3, or of claim 4, wherein when viewed in a circular cross-section of the apparatus between the support member and the worm wheel, a width between the inner-diameter portion of the worm wheel and each of the first support surface and the second support surface increases from the one end of each of the first support surface and the second support surface toward another end of each of the first support surface and the second support surface, and a width between the inner-diameter portion of the worm wheel and each of the third support surface and the fourth support surface increases from the one end of each of the third support surface and the fourth support surface toward another end of each of the third support surface and the fourth support surface.

6. The apparatus of claim 4, or of claim 5 in combination with claim 4, wherein the first roller and the second roller are each configured to be released as the first roller and the second roller are each pushed toward the another end of each of the first support surface and the second support surface by the first coupling protrusion inserted between the first roller and the second roller.

7. The apparatus of claim 4 or 6, or of claim 5 in combination with claim 4, wherein the third roller and the fourth roller are each configured to be released as the third roller and the fourth roller are each pushed toward the another end of each of the third support surface and the fourth support surface by the second coupling protrusion inserted between the third roller and the fourth roller.

8. The apparatus of anyone of claims 3-7, wherein the support member and the clutch drum are elastically supported by an elastic member disposed between the support member and the clutch drum.

9. The apparatus of anyone of claims 1-8, wherein a shift ring is coupled to an outer-diameter portion of the clutch drum, and
wherein the shift ring comprises:
a main body having a ring shape and comprising an inner ring portion and an outer ring portion, the inner ring portion being inserted and coupled into a coupling groove positioned on the outer-diameter portion of the clutch drum; and
a cut-out portion positioned between one end and another end of the main body, the one end and the another end of the main body being opposite to each other.

10. The apparatus of claim 9, wherein a coupling pin is coupled to penetrate the one end of the main body, one end of a lever, and the another end of the main body in a state in which the one end of the lever is inserted into the cut-out portion of the main body.

11. The apparatus of claim 10, wherein the elastic member is configured to be compressed when the clutch drum is moved in an engagement direction toward the support member by a force applied to the lever, and the clutch drum is configured to be moved in a disengagement direction by a restoring force of the elastic member when the force applied to the lever is eliminated.

12. The apparatus of anyone of claims 1-11, wherein the worm wheel is connected to a power source by a power transmission member.

13. The apparatus of claim 12, wherein the power transmission member includes a belt, and a gear portion disposed on an inner-diameter portion of the power transmission member is configured to engage with a gear portion disposed on an outer-diameter portion of the worm wheel.

14. The apparatus of claim 4, or of any one of claims 5-13 provided that in combination with claim 4,
wherein the first support surface, the second support surface, the third support surface, and the fourth support surface are each a planar surface cutting a round circumferential surface of the outer-diameter portion of the lead nut, the planar surface extending in the longitudinal direction of the lead nut and terminating short of an entire length of the lead nut,
wherein a first stepped projection, a second stepped projection, a third stepped projection, and a fourth stepped projection, which respectively correspond to the first support surface, the second support surface, the third support surface, and the fourth support surface, are defined on portions of the outer-diameter portion of the lead nut where the planar surfaces terminate,
wherein the first locking member is attached to and supported on the first stepped projection, the second locking member is attached to and supported on the second stepped projection, the third locking member is attached to and supported on the third stepped projection, and the fourth locking member is attached to and supported on the fourth stepped projection.

15. The apparatus of anyone of claims 3-7, or of anyone of claims 8-14 provided that in combination with claim 3,
wherein the first support protrusion includes a first key of the support member positioned on an inner-diameter portion of the first support protrusion, and the second support protrusion includes a second key of the support member positioned on an inner-diameter portion of the second support protrusion,
wherein the at least one key positioned on an inner-diameter portion of the clutch drum includes a first key of the clutch drum and a second key of the clutch drum aligned with the first key of the support member and the second key of the support member, respectively, along the longitudinal direction of the lead nut.
